# EUROPÄISCHE PATENTSCHRIFT

(11) **EP 1 594 707 B1**
(45) Veröffentlichungstag und Bekanntmachung des Hinweises auf die Patenterteilung: **24.05.2006**
(21) Anmeldenummer: 04711355.0
(22) Anmeldetag: 16.02.2004
(51) Int. Cl.: B60H 1/00

(54) **BELÜFTUNGSEINRICHTUNG**
VENTILATION DEVICE
DISPOSITIF D'AERATION

(30) Priorität: 21.02.2003 DE 10307476
(43) Veröffentlichungstag der Anmeldung: 16.11.2005
(73) Patentinhaber: Bayerische Motoren Werke Aktiengesellschaft, 80809 München (DE)
(72) Erfinder: GEIGER, Hary, 85716 Unterschleissheim (DE)
(86) Internationale Anmeldenummer: PCT/EP2004/001449
(87) Internationale Veröffentlichungsnummer: WO 2004/074022

(56) Entgegenhaltungen:
- EP-A- 0 330 827
- EP-A- 0 830 963
- DE-A- 3 813 548
- DE-A- 19 839 507

## Beschreibung

Die Erfindung betrifft ein Kraftfahrzeug umfassend eine Belüftungseinrichtung für den Innenraum eines Kraftfahrzeugs sowie eine Reinigungsanlage für die Frontscheibe des Kraftfahrzeugs gemäß dem Oberbegriff des Anspruchs 1 sowie ein Verfahren zur Belüftung des Innenraumes eines Kraftfahrzeugs gemäß dem Oberbegriff des Anspruchs 5.

Die Waschwasser-Spritzdüsen der Reinigungsanlage für die Frontscheibe eines Kraftfahrzeugs sind bislang stets im Bereich der Luftansaugung für die Lüftungs- bzw. Klimaanlage angeordnet. Aus diesem Grund wird bei Betätigung der Reinigungsanlage der Lufteintrittsbereich der Lüftungs- oder Klimaanlage mit dem Waschwasser und somit mit den darin befindlichen und ausgasenden Reinigungszusätzen benetzt. Dieselbe Problematik stellt sich auch bei der Betätigung der Waschvorrichtung für die Frontscheinwerfer; da das Waschwasser je nach Fahrgeschwindigkeit mehr oder weniger ebenfalls die Frontscheibe bzw. den Lufteintrittsbereich der Lüftungs- oder Klimaanlage benetzt. Da beide Waschvorrichtungen in der Regel zyklisch gemeinsam betätigt werden, wird somit der Benetzurigseffekt weiter verstärkt. Bekannte Belüftungseinrichtungen für Lüftungs- oder Klimaanlagen für Kraftfahrzeuge saugen entweder die mit Waschwasserzusätzen benetzte Luft in den Innenraum des Fahrzeuges oder aber schalten mit Betätigung der Reinigungsanlage vom Frischluftbetrieb auf den Umluftbetrieb - in dem keine Luft mehr von außen in das Fahrzeug eingesaugt wird - um.

Eine Belüftungseinrichtung ist bereits aus der DE 38 13 548 A1 bekannt. Diese Belüftungseinrichtung vermeidet das Ansaugen der im Ansaugbereich für Frischluft durch das aus den Scheibenwaschdüsen austretende Waschwasser entstehenden Gase, indem mit Betätigung der Waschwasser-Spritzdüse die Frischluftklappe geschlossen und die Belüftungseinrichtung auf Umluft umgeschaltet wird. Nach einer vorgebbaren Verweilzeit wird dann wieder automatisch auf Frischluftzufuhr umgestellt.

Ferner ist aus der EP 0 330 827 A1 eine Vorrichtung bekannt, bei der ebenfalls durch Betätigung der Scheibenwaschanlage die Frischluftzufuhr in den Innenraum des Kraftfahrzeugs unterbrochen und nach einer vorgebbaren Zeit wieder freigegeben wird.

Nachteilig bei den Einrichtungen gemäß dem Stand der Technik ist, dass sich innerhalb der Verweilzeit für den Umluftbetrieb ein die Sicherheit beeinträchtigender Scheibenbeschlag bilden kann und der Fahrer so zu einem manuellen Eingriff, einer Deaktivierung der Umluft und zum einstellen der Defrostfunktion gezwungen wird. Dadurch wird der Fahrer sicherheitsbeeinträchtigt vom Verkehrsgeschehen abgelenkt.

Des Weiteren ist aus der EP 0 830 963 A2 eine gattungsgemäße Vorrichtung und ein gattungsgemäßes Verfahren zur Steuerung von Lüftungselementen eines Fahrzeugs bekannt.

Ferner ist in der DE 198 39 507 A1 ein Verfahren zur automatischen Betätigung der Umluftanlage eines Kraftfahrzeugs bekannt, bei dem die Umluftanlage automatisch aufgrund der Betätigung der Wasch- und/oder Wischanlage aktiviert wird.

Der Erfindung liegt die Aufgabe zugrunde, ein Kraftfahrzeug der eingangs genannten Art - umfassend eine Belüftungseinrichtung für den Fahrzeuginnenraum sowie eine Reinigungsanlage für die Frontscheibe - zu schaffen, wobei die Belastung angesaugter Frischluft, mit durch die Betätigung der Scheibenwaschvorrichtung erzeugten Waschmittelzusatzgasen, minimiert und die darüber hinaus die Sicherheit bei der Führung des Fahrzeuges weiter erhöht ist.

Diese Aufgabe wird durch ein Kraftfahrzeug umfassend eine Belüftungseinrichtung mit Mitteln zur Umschaltung zwischen einem Umluft- und einem Frischluftbetrieb gelöst, die mindestens einen Beschlagsensor zur Ermittlung mindestens eines den Grad an Scheibenbeschlag oder an Scheibenbeschlagwahrscheinlichkeit wiedergebenden Parameters sowie zumindest ein Auswertemittel umfasst, wobei das Auswertemittel in Abhängigkeit von diesem/jedem ermittelten Parameter bei Überschreiten eines zuvor definierten Parametergrenzwertes in einer Ausführung ein Signal zur zumindest bedarfsweisen Umschaltung auf Frischluftbetrieb generiert. Altemativ zur Signalgenerierung für die Frischluft-Umluftumschaltung ist in einer weiteren Ausführung vorgesehen eine Zeitdauer für eine einzuhaltende Verweildauer im Umluftbetrieb zu generieren bzw. festzulegen. Durch die Erfassung mindestens eines Parameters für den vorliegenden Scheibenbeschlag mittels eines Beschlagsensors und die Auswertung des erfassten Parameters mittels einem Auswertemittel sowie die mittelbare oder unmittelbare Ansteuerung eines Verschlussmittels zur Umstellung auf Umluftbetrieb mittels einer Steuereinrichtung wird ein die Fahrsicherheit beeinträchtigendes Beschlagen der Frontscheibe eines Kraftfahrzeugs wirksam verhindert.
Erfindungsgemäß wird initiiert durch die Betätigung der Reinigungsanlage ein Signal zur Schließung der Verschlussmittel und somit zur Umstellung auf dem Umluftbetrieb erzeugt. Anschließend erfolgt über die Auswertemittel und die Steuereinrichtung die mittelbare oder unmittelbare Ansteuerung der Verschlussmittel in Abhängigkeit von dem ermittelten Grad an Scheibenbeschlagwahrscheinlichkeit (mittelbare Ansteuerung) bzw. tatsächlich vorhandenem Scheibenbeschlag (unmittelbare Ansteuerung).

Dabei erfolgt die mittelbare Ansteuerung aufgrund der Erfassung und Auswertung von mindestens einem, bereits im Vorfeld einer tatsächlich nicht sichtbaren, also einer sich anbahnenden Scheibenbeschlagung, vorhandenen Parameter (z.B. Luftfeuchte und/oder Innenraumtemperatur und/oder Außentemperatur) für die Scheibenbeschlagwahrscheinlichkeit. Das heißt bevor es überhaupt zu einem sichtbaren Beschlagen der Scheiben gekommen ist, wird eine zuverlässige Aussage darüber gemacht, wann voraussichtlich die Scheiben so beschlagen werden, dass eine Beeinträchtigung der Sicherheit bei der Führung des wird eine zuverlässige Aussage darüber gemacht, wann voraussichtlich die Scheiben so beschlagen werden, dass eine Beeinträchtigung der Sicherheit bei der Führung des Fahrzeuges aufgrund schlechter Sichtverhältnisse durch Scheibenbeschlag vorliegt. Aufgrund dieser Aussage kann dann eine entsprechende Entscheidung getroffen werden, zu welchem Zeitpunkt die Belüftungseinrichtung von Umluftbetrieb auf Frischluftbetrieb oder Teilfrischluftbetrieb (Mischbetrieb) umgestellt werden sollte, um ein Beschlagen der Scheiben sicher zu vermeiden. Zur Vermeidung des Transports feuchter Luft an die Scheiben wird gemäß der Erfindung in einem Zwischenschritt - bevor von Umluft- auf Frischluftbetrieb umgeschaltet wird - die Luftzufuhr zu den Scheiben unterbunden (Frischluftzufuhr in Fahrzeuginnenraum aber nicht im Scheibenbereich), um zum einen die Beschlagsbildung zu verzögern und zum anderen die Verweilzeit im Umluftbetrieb zu verlängern.

Die unmittelbare Ansteuerung des Verschlussmittels zur Umstellung von Umluftbetrieb auf Frischluftbetrieb erfolgt aufgrund der Erfassung und Auswertung mindestens eines, den tatsächlich bereits vorliegenden sichtbaren Scheibenbeschlag feststellenden, Parameters (z.B. Luftfeuchte und/oder Innenraumtemperatur und/oder Außentemperatur). In diesem Fall liegt also bereits ein sichtbarer Scheibenbeschlag vor (der zu erfassende und auszuwertende Parameter hat also bereits einen vordefinierten Parametergrenzwert überschritten), aufgrund dessen unmittelbar eine Umstellung von Umluftbetrieb auf Frischluftbetrieb erfolgt.

In beiden Fällen (mittelbare oder unmittelbare Ansteuerung) kann die Umschaltung von 100% Umluftbetrieb auf 100% Frischluftbetrieb erfolgen. In einer bevorzugten Ausführung ist ein gleitender Übergang vom Umluftbetrieb auf den Frischluftbetrieb vorgesehen, wobei durch kontinuierliches oder stufenartiges Öffnen bzw. Schließen der Verschlussmittel von Umluftbetrieb auf Frischluftbetrieb umgeschaltet wird.
Für die durch Betätigung der Reinigungsanlage initiierte Umstellung auf Umluftbetrieb sind Mittel (Hard- und/oder Software) vorhanden, die die Aktivierung der Waschwasser-Spritzdüsen zeitlich verzögern können. Bei einer verzögerten Aktivierung der Waschwasser-Spritzdüsen werden die Verschlussmittel für den Umluftbetrieb zeitlich vor der Aktivierung der Waschwasser-Spritzdüsen in die geschlossene Stellung verbracht. Bei einer unverzögerten Aktivierung der Waschwasser-Spritzdüsen erfolgt mit der Aktivierung der Waschwasser-Spritzdüsen zeitgleich die Betätigung der Verschlussmittel. Eine Umstellung zwischen diesen beiden Betriebsmodi kann manuell per Schalter oder vollautomatisch in Abhängigkeit von Randparametem (z.B. Außenluftfeuchte und/oder Außenlufttemperatur und/oder Außenluftschadstoffe) erfolgen.

Weiterhin betrifft die Erfindung ein Verfahren zur Belüftung des Fahrzeuginnenraumes unter Verwendung der erfindungsgemäßen Vorrichtung, bei dem initiiert durch die Betätigung der Reinigungsanlage ein Signal zur Schließung der Verschlussmittel (Umstellung auf Umluftbetrieb) erzeugt sowie zumindest ein Parameter für einen Grad an Scheibenbeschlag beziehungsweise an Scheibenbeschlagwahrscheinlichkeit ermittelt wird und in Abhängigkeit von jedem ermittelten Parameter entweder durch Vergleich mit einem zuvor definierten Grenzwert ein Signal zur unmittelbaren Öffnung des Verschlussmittels und somit zur zumindest bereichsweisen Umschaltung auf Frischluftbetrieb generiert wird, oder eine mittelbare Öffnung initiiert wird, indem eine Zeitdauer für die einzuhaltende geschlossene Stellung des Verschlussmittels ermittelt wird und nach Ablauf dieser Zeitdauer eine zumindest bereichsweise Öffnung des Verschlussmittels erfolgt. Dabei kann die Signalerzeugung zur Betätigung der Waschwasser-Spritzdüsen und der Signalerzeugung zur Schließung des Verschlussmittels entweder zeitgleich oder zeitlich nacheinander (Schließung des Verschlussmittels und nachfolgend Aktivierung der Waschwasser-Spritzdüsen) erfolgen. Die Umstellung zwischen diesen beiden Betriebsmodi kann manuell per Schalter oder vollautomatisch in Abhängigkeit von Randparametern (z.B. Außenluftfeuchte und/oder Außenlufttemperatur und/oder Außenluftschadstoffe) erfolgen.

Die Auslegung des Sensors beziehungsweise der Sensoren nach Art und Typ ist von der beziehungsweise den zu erfassenden Parametergrößen abhängig. So ist insbesondere die Verwendung eines Luftfeuchtesensors alleine oder in Kombination mit einem Außen- und/oder Innentemperatursensor möglich. Auch kann der bisherige zeitliche Verlauf dieser Größen für eine Entscheidung, ob Umluft- oder Frischluftbetrieb erforderlich ist, von Interesse sein und daher mit in die Auswertung der Parameter einbezogen werden. Eine Erfassung dieser Größen könnte demnach also auch bei Nichtbetätigung der Reinigungsanlage oder Nichtbetrieb des Fahrzeugs stets erfolgen und jeweils ein zeitliches Fenster der Daten abgespeichert werden, so dass bei einer Inbetriebnahme des Fahrzeugs beziehungsweise der nach längerer Zeit der Nichtbetätigung erfolgenden Betätigung der Reinigungsanlage auf diese Daten über ein Auswertemittel zurückgegriffen werden kann und eine Ansteuerung über ein Ansteuermittel für Umluft/Frischluft unmittelbar nach Initiierung durch die Aktivierung der Reinigungsanlage anhand aktueller Daten erfolgen kann. Sowohl das Auswertemittel als auch das Ansteuermittel ist jeweils bevorzugt in das Motorsteuergerät oder ein die Steuerfunktionen der Klimaanlage wahrnehmendes Steuergerät integriert. Insbesondere sind diese Mittel in Form von programmtechnischen Mitteln in die vorhandenen Ressourcen von standardmäßig bereits verwendeten Steuergeräten (z.B. Klimasteuergerät) eingebunden. Die Auswerte- und Ansteuermittel sind derart ausgebildet, dass entweder die Einleitung der Umstellung auf Umluftbetrieb zwar nach Aktivierung der Reinigungsanlage aber zeitlich vor einer tatsächlich erfolgenden Spritzfunktion einer Waschwasser-Spritzdüse erfolgt bzw. abgeschlossen ist oder die Einleitung der Spritzfunktion und die Einleitung der Umstellung auf Umluft im wesentlichen zeitgleich erfolgt. Die zeitlich vorgezogene Umschaltung auf Umluft hat zum Vorteil, dass durch Aktivierung einer Waschdüse und der darauf folgenden Umstellung von Frischluft auf Umluft störende Gase der Waschflüssigkeit mit erhöhter Sicherheit nicht in den Fahrzeuginnenraum gelangen.
Die Erfindung wird nachfolgend durch ein Ausführungsbeispiel anhand von Figuren erläutert. Dabei zeigen:
- Figur 1:: die wesentlichen Komponenten einer Belüftungseinrichtung eines erfindungsgemäßen Kraftfahrzeugs in schematischer Darstellung;
- Figur 2:: die Belüftungseinrichtung gemäß Figur 1 in einem vereinfachten Funktionsschaltbild.

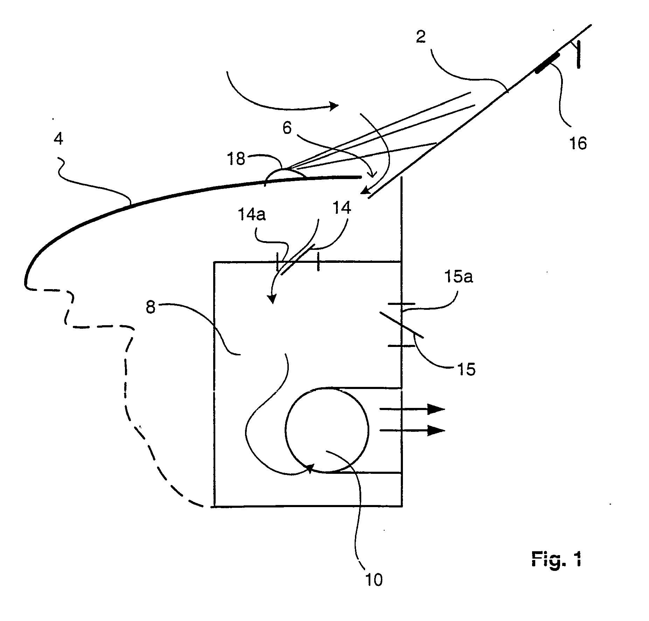

Die Figur 1 zeigt in schematischer Darstellung ausschnittsweise den vorderen Bereich eines Kraftfahrzeugs. Dargestellt ist der Bereich des hinteren, an den Fahrzeuginnenraum angrenzenden, Motorraumes mit einem zwischen einer Frontscheibe 2 und einer Motorhaube 4 angeordneten Lufteinlassbereich 6 über den von einer Belüftungseinrichtung Frischluft in den Fahrzeuginnenraum beförderbar ist (Frischluftbetrieb). Die Belüftungseinrichtung für den Innenraum eines Kraftfahrzeuges gemäß der Erfindung umfasst im wesentlichen ein in einer Gebläsekammer 8 angeordnetes Gebläse 10 für den Luftaustausch bzw. die Luftumwälzung der Luft im Fahrzeuginnenraum, eine Steuereinrichtung 12a zur Ansteuerung eines Verschlussmittels 14 welches die Gebläsekammer 8 mit dem Lufteinlassbereich 6 verbindet bzw. von diesem trennt, einen Beschlagsensor 16 zur Erfassung mindestens eines Parameters für den Grad an tatsächlich bereits vorliegendem Scheibenbeschlag oder für den Grad an Wahrscheinlichkeit für einen kurze Zeit später zu erwartenden Scheibenbeschlag sowie Auswertemittel 12b zur entsprechenden Auswertung des mindestens einen Parameters wobei abhängig von der Auswertung die Ansteuerung des Verschlussmittels 14 über die Steuereinrichtung 12a erfolgt. Die Gebläsekammer 8 ist über eine erste, mittels des Verschlussmittels 14 zu öffnende und zu schließende, Öffnung 14a saugseitig einerseits mit dem Luftansaugbereich 6 und andererseits über eine zweite, mittels eines zweiten Verschlussmittels 15 zu öffnende und zu schließende Öffnung 15a mit dem Fahrzeuginnenraum verbunden. Das in der Gebläsekammer 8 angeordnete Gebläse 10 saugt somit Frischluft von außen und/oder Fahrzeuginnenraumiutt aus dem Fahrzeuginnenraum je nach Stellung der Verschlussmittel 14, 15 an, drückt diese in den Fahrzeuginnenraum hinein und sorgt somit für einen entsprechenden Luftaustausch (Frischluftbetrieb) beziehungsweise eine entsprechende Luftumwälzung (Umluftbetrieb). Der Beschlagsensor 16 ist bevorzugt auf der Innenseite der Frontscheibe 2, insbesondere in deren oberen mittleren Bereich - wo häufig auch der Innenrückspiegel verklebt ist - angeordnet. Dies hat zum Vorteil, dass der Frontscheibenbereich, der die größte Beschlagneigung aufweist überwacht wird und einem Beschlagen frühzeitig entgegengewirkt werden kann. Bevorzugt können auch Sensoren an mehreren Stellen innerhalb des Fahrzeuginnenraumes insbesondere an der Innenseite der Frontscheibe angeordnet werden. Alternativ oder zusätzlich können die Temperatur- und/oder Feuchtesensoren (Beschlagsensor) im Luftstrom zu den Scheiben insbesondere im Luftstrom zu der Frontscheibe angeordnet werden. Die Steuereinrichtung 12a und die Auswertemittel 12b können separat in einzelnen Geräten oder bevorzugt gemeinsam mit weiteren anderen Steuereinrichtungen in einem gemeinsamen Steuergerät implementiert sein. Bevorzugt sind die Steuereinrichtung 12a und die Auswertemittel 12b in ein bereits bestehendes Steuergerät wie das Motorsteuergerät oder das Klimasteuergerät integriert. Der Beschlagsensor 16 beinhaltet je nach auszuwertenden Parametern (bevorzugt Luftfeuchte und/oder Temperatur) unterschiedliche Funktionen und ist entsprechend auszuwählen. Die Auswertemittel 12b sind derart ausgebildet, dass in Abhängigkeit von jedem ermittelten Parameter entweder durch Vergleich mit einem zuvor definierten Grenzwert ein Signal zur Öffnung des Verschlussmittels 14 und somit zur zumindest bedarfsweisen Umschaltung auf Frischluftbetrieb generiert wird, oder eine Zeitdauer für die einzuhaltende geschlossene Stellung des Verschlussmittels 14 ermittelt wird und nach Ablauf dieser Zeitdauer (Zwischenschaltung eines Zeitgliedes) eine zumindest bereichsweise Öffnung des Verschlussmittels 14 erfolgt. Zeitgleich erfolgt die Ansteuerung der zweiten Verschlussmittel 15 um einen entsprechenden Umluftbetrieb oder einen gemischten Umluft-Frischluftbetrieb zu gewährleisten. Diese Ansteuerung wird bevorzugt ebenfalls über die Steuereinrichtung 12a durchgeführt.

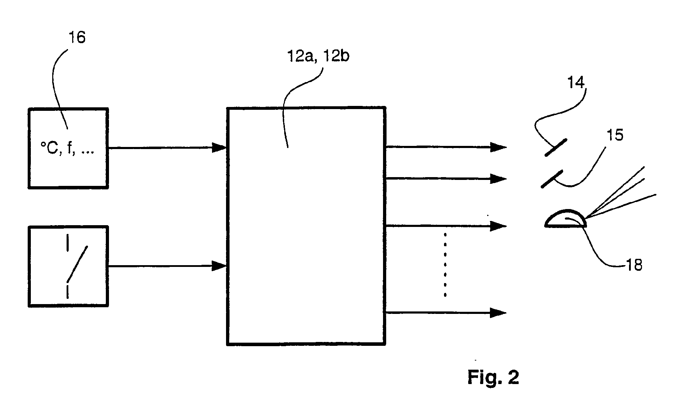

Die Figur 2 zeigt schematisch die funktionalen Zusammenhänge der einzelnen Komponenten der erfindungsgemäßen Belüftungseinrichtung. Es wird veranschaulicht, dass ein Steuergerät mit integrierter Steuereinrichtung 12a und integriertem Auswertemittel 12b eingangsseitig mit dem Signal des Beschiagsensors 16 sowie einem weiteren Signal eines weiteren Sensors, der die Aktivierung der Reinigungseinrichtung erfasst, beaufschlagt ist. Der weitere Sensor kann beispielsweise die Betätigung des Wischwasserschalters oder die Aktivierung der Wischwasserpumpe oder ein hierzu äquivalentes Signal erfassen. Ausgangsseitig ist das Steuergerät beispielsweise mit einer Waschwasser-Spritzdüse 18 zu deren Aktivierung sowie den Verschlussmitteln 14, 15 zur Steuerung der verschiedenen Betriebsmodi Umluftbetrieb, Frischluftbetrieb oder gemischter Umluft-Frischluftbetrieb wirkverbunden.
Die Einrichtung kann sowohl separat ausgebildet oder aber als Bestandteil einer Klimaanlage ausgebildet sein. So kann die Einrichtung, eingebunden in ein Gesamtsystem, beispielsweise auch die von einer automatischen Umlufteinschaltung (z.B. aufgrund erhöhter. Abgaserfassung durch Schadstoffsensoren) durch ein automatisches Umluftkontrollsystem verordnete Verweilzeit für einen Umluftbetrieb unterbrechen und eine Umstellung auf Frischluftbetrieb oder Mischbetrieb erzwingen. In diesem Fall ist sie beispielsweise in das Gesamtregelsystem der Klimaanlage eingebunden und bildet hier einen Bestandteil eines Regelkreises.

## Patentansprüche

1. Kraftfahrzeug, umfassend eine Belüftungseinrichtung für den Innenraum eines Kraftfahrzeugs mit Mitteln zur Umschaltung zwischen einem Umluft- und einem Frischluftbetrieb sowie eine Reinigungsanlage für die Frontscheibe des Kraftfahrzeugs, wobei vorhanden ist:
- mindestens ein Beschlagsensor (16) zur Ermittlung mindestens eines, den Grad an Scheibenbeschlag oder an Scheibenbeschlagwahrscheinlichkeit wiedergebenden Parameters und
- ein Auswertemittel (12b) welches in Abhängigkeit von diesem/jedem ermittelten Parameter bei Überschreiten eines zuvor definierten Parametergrenzwertes entweder ein Signal zur zumindest bedarfsweisen Umschaltung auf Frischluftbetrieb generiert, oder eine Zeitdauer für eine einzuhaltende Verweildauer im Umluftbetrieb generiert,
**dadurch gekennzeichnet, dass**
- initiiert durch die Betätigung der Reinigungsanlage eine Umstellung von Frischluftbetrieb auf Umluftbetrieb erfolgt,
- und Mittel vorhanden sind, durch die vor Umschaltung von Umluftbetrieb auf Frischluftbetrieb die Luftzufuhr zu den Scheiben unterbunden wird.

2. Kraftfahrzeug nach vorstehendem Anspruch, **dadurch gekennzeichnet, dass** der Beschlagsensor (16) im mittleren oberen Bereich einer Windschutzscheibe angeordnet ist.

3. Kraftfahrzeug nach einem der vorstehenden Ansprüche, **gekennzeichnet durch** Mittel zur zeitgleichen Einleitung der Spritzfunktion der Waschwasser-Sprintzdüse (18) und der Umstellung auf Umluftbetrieb bei Aktivierung der Waschwasser-Spritzdüse (18).

4. Kraftfahrzeug nach einem der Ansprüche 1 oder 2, **gekennzeichnet durch** Mittel zur zeitlich aufeinanderfolgenden Einleitung der Generierung eines Signals bzw. einer Signalfolge zur Umstellung auf Umluftbetrieb und der zeitlich verzögerten Einleitung der Spritzfunktion bei Aktivierung der Waschwasser-Spritzdüse (18).

5. Verfahren zur Belüftung des Innenraumes eines Kraftfahrzeugs gemäß Anspruch 1, wobei
- mittels einem Beschlagsensor (16) mindestens ein, den Grad an Scheibenbeschlag beziehungsweise an Scheibenbeschlagwahrscheinlichkeit wiedergebender Parameter ermittelt wird,
- und in Abhängigkeit von jedem ermittelten Parameter entweder bei Überschreiten eines zuvor definierten Parametergrenzwertes ein Signal zur zumindest bedarfsweisen Umschaltung auf Frischluftbetrieb, oder eine Zeitdauer für eine einzuhaltende Verweildauer im Umluftbetrieb generiert wird,
**dadurch gekennzeichnet, dass**
- initiiert durch die Betätigung der Reinigungsanlage eine Umstellung von Frischluftbetrieb auf Umluftbetrieb erfolgt, und
- vor Umschaltung von Umluftbetrieb auf Frischluftbetrieb die Luftzufuhr zu den Scheiben unterbunden wird.

## Claims

1. A motor vehicle comprising a device for ventilating the passenger compartment of a motor vehicle, with means for switching between a recirculation air and a fresh air mode, and a system for cleaning the windscreen of the motor vehicle, the following being provided: at least one fogging sensor (16) for determining at least one parameter representing the degree of fogging or of the likelihood of fogging, and an evaluation means (12b), which, as a function of this/each determined parameter, when a previously defined parameter limit is exceeded, either generates a signal for switching, at least temporarily, to fresh air mode or generates a duration for a dwell time to be adhered to in the recirculation air mode, **characterised in that** a change-over from fresh air mode to recirculation air mode, which is initiated by the actuation of the cleaning system, takes place, and means are provided by which the supply of air to the screens is cut off prior to the switching from recirculation air mode to fresh air mode.

2. A motor vehicle according to the preceding claim, **characterised in that** the fogging sensor (16) is arranged in the central upper region of a windscreen.

3. A motor vehicle according to any one of the preceding claims, **characterised by** means for the simultaneous initiation of the spraying function of the washing water spray nozzle (18) and the change-over to recirculation air mode on activation of the washing water spray nozzle (18).

4. A motor vehicle according to either claim 1 or claim 2, **characterised by** means for the successive initiation of the generation of a signal or a sequence of signals for changing over to recirculation air mode and the delayed initiation of the spraying function on activation of the washing water spray nozzle (18).

5. A method for ventilating the passenger compartment of a motor vehicle according to claim 1, wherein at least one parameter representing the degree of fogging or of the likelihood of fogging is determined using a fogging sensor (16), and, as a function of each determined parameter, when a previously defined parameter limit is exceeded, either a signal for switching, at least temporarily, to fresh air mode or a duration for a dwell time to be adhered to in recirculation air mode is generated, **characterised in that** a change-over from fresh air mode to recirculation air mode, which is initiated by the actuation of the cleaning system, takes place and the supply of air to the screens is cut off prior to the switch-over from recirculation air mode to fresh air mode.

## Revendications

1. Véhicule automobile comportant un dispositif d'aération pour l'habitacle d'un véhicule automobile avec des moyens de commutation entre un mode opératoire à air recirculé et un mode opératoire à air frais, ainsi qu'un système de nettoyage de pare-brise du véhicule automobile, comportant :
- au moins un capteur de buée (16) pour la détection d'un paramètre indiquant le degré d'embuage de la vitre ou la probabilité d'embuage de la vitre, et
- un moyen d'exploitation (12b) qui génère un signal pour la commutation, en fonction de ce paramètre détecté, sur le mode opératoire à air frais au moins selon les besoins lors du dépassement d'une valeur seuil de paramètre définie auparavant, ou bien génère une durée pour une durée de maintien à respecter en mode opératoire à air recirculé,
**caractérisé en ce qu'**
- une commutation du mode opératoire à air frais sur le mode opératoire à air recirculé a lieu, initiée par l'actionnement du système de nettoyage,
- et des moyens empêchent une amenée d'air vers les vitres, avant de commuter du mode opératoire à air recirculé sur le mode opératoire à air frais.

2. Véhicule automobile selon la revendication précédente,
**caractérisé en ce que**
le capteur de buée (16) est disposé dans la zone médiane supérieure d'un pare-brise.

3. Véhicule automobile selon l'une quelconque des revendications précédentes,
**caractérisé par**
des moyens pour le déclenchement simultané de la fonction d'aspersion du gicleur d'eau de lavage (18) et la commutation sur le mode opératoire à air recirculé lors de l'activation du gicleur à eau de lavage (18).

4. Véhicule automobile selon l'une quelconque des revendications 1 ou 2,
**caractérisé par**
des moyens pour le déclenchement consécutif de la génération d'un signal et/ou d'une suite de signaux pour la commutation sur le mode opératoire à air recirculé et le déclenchement différé de la fonction d'aspersion lors de l'activation du gicleur à eau de lavage (18).

5. Procédé d'aération de l'habitacle d'un véhicule automobile selon la revendication 1,
selon lequel
- un capteur de buée (16) saisit au moins un paramètre indiquant le degré d'embuage de la vitre et/ ou la probabilité d'embuage de la vitre,
- en fonction de ce paramètre saisi on génère soit un signal lors du dépassement d'une valeur seuil de paramètre définie préalablement pour la commutation au moins par secteurs sur le mode opératoire à air frais, soit une durée pour une durée de maintien à respecter en mode opératoire à air recirculé,
**caractérisé en ce qu'**
- une commutation du mode opératoire à air frais sur le mode opératoire à air recirculé est initiée par l'actionnement du système de nettoyage, et
- avant de commuter du mode opératoire à air recirculé sur le mode opératoire à air frais, l'amenée d'air vers les vitres est empêchée.
